# EUROPEAN PATENT APPLICATION

(11) **EP 4 506 821 A1**
(43) Date of publication of application: **12.02.2025**
(21) Application number: 23191071.2
(22) Date of filing: 11.08.2023
(51) Int. Cl.: G06F 9/54, G06N 20/00

(54) **EVENT HANDLING FOR DIGITALISED PROCESSES**

(71) Applicant: Barclays Execution Services Limited, London E14 5HP (GB)
(72) Inventor: MANDE, Rohit Abaji, 411046 Pune (IN); MADDOCK, Nicholas James, Stoke-on-Trent, ST4 8LQ (GB); MOGRE, Vaibhav, 442401 Chandrapur (IN)
(74) Representative: Carpmaels & Ransford LLP

(57) **Abstract**

There is provided a method of handling events for digitalised processes. The method comprises: obtaining a first event record, the first event record being linked to a first digitalised process and comprising: a first expected time of a first event occurring, and a first status indicator indicative of the likelihood of the first event occurring at the first expected time. The method then further comprises: inputting the first event record into a status indicator confidence model; receiving a first confidence score from the status indicator confidence model for the first status indicator; and if the first confidence score is below a predetermined threshold, setting a flag for the first event record.

## Description

### Technical Field

This present disclosure relates to event handling for digitalised processes. In particular, the present disclosure relates to a method, computer and computer-readable storage medium for handling events for digitalised processes.

### Background

Many digitalised systems and processes are made up of a number of shorter subroutines and sub-tasks that are executable to contribute towards an end goal. For example, a multi-core processor may have an over-arching task that is split up into a collection of smaller processes for each processor core to manage. In a single core processor, each individual instruction can be considered a separate task, where the next instruction cannot complete until the previous one has finished. Similarly, when installing software onto a personal computer, there are several stages that are required, such as checking system requirements, removing conflicting software and installing the software itself.

When a process is nearing completion, each of the individual tasks should complete at an expected time such that no one task delays or extends the execution time of the overall process. For example, it is undesirable for a new software installation to be delayed by uninstalling old drivers when the files containing the new software are ready to be implemented.

In order to prevent or reduce idle or wasted digital resources, each sub-task or subroutine often provides an indication as to its current progress, and can furthermore provide a likelihood indication that it will complete as scheduled. However, this likelihood value can be uncertain ("noisy") due to certain unknown variables, for example resource usage of additional software that is currently running and required by completion of the overall process. Such noise can mean that even an indication of a high likelihood of completing the sub-task on schedule may still not provide a high probability that the task is in fact completed on schedule.

Returning to the multi-core processor example, each processor core may be in communication with the same shared memory but otherwise be independent of different cores. While each core would be able to carry out its task on the shared memory without any other cores using the memory, thus providing a high confidence of completing its task on schedule, there may be bottlenecks where all of the cores require more memory between them than is currently available on the shared memory, meaning that some cores must stall in order to allow the tasks to continue causing the schedule to be missed.

Within a single core processor, a similar scenario can occur with a branch predictor. In low level machine code (i.e. assembly), it is only determined whether a branch (i.e. a conditional 'if' statement) is taken several steps into a processor pipeline. In order to improve throughput, the processor will predict which branch is taken and begin speculatively executing instructions in the preceding pipeline stages. Should the branch predict correctly, no clock cycles are wasted. However, should the branch mis-predict, the pipeline has to be flushed and the correct instructions must be executed from scratch. Typically, branch predictors will predict that the branch taken previously will be taken again. However, when the low-level machine code is correlated with higher level human-readable code (e.g. Python, C, Java etc.), a single if statement may comprise multiple branches in low level machine code. Therefore, at the conclusion of the high level if statement, the branch predictor may predict incorrectly that a loop continues. This will then likely require that the processor pipeline is flushed, reducing the throughput of the program.

With reference to the software installation example, when installing software onto a personal computer (PC), the installation software may provide a prediction that the install will be completed in a certain time. However, this may be based on assumptions that, for software security reasons, the installer may not be able to verify. For example, drivers that are necessary for the installation may conflict with other applications on the PC.

Accordingly, there is a need for a system that can better handle events in digitalised processes, particularly events that do not complete at an expected time.

### Summary of the Disclosure

The invention is defined by the independent claims, with further embodiments defined by the dependent claims.

A first aspect of the invention relates to a method of handling events for digitalised processes, the method comprising: obtaining a first event record, the first event record being linked to a first digitalised process and comprising: a first expected time of a first event occurring, and a first status indicator indicative of the likelihood of the first event occurring at the first expected time; inputting the first event record into a status indicator confidence model; receiving a first confidence score from the status indicator confidence model for the first status indicator; and setting a flag for the first event record when the first confidence score is below a predetermined threshold. The invention thus provides an improved way to handle events in digitalised processes, particularly events that do not complete at an expected time by making use of a status indicator confidence model and a flag. Such a status indicator confidence model is able to consider any trends in over- or under-predicting the expected time so that a more accurate prediction of whether the digitalised process will complete as expected can be made. Then, a flag is set when the confidence that an event will occur at an expected date/time is below a threshold such that a user can be alerted to any delays and re-allocate resources to mitigate the chance of the expected date/time being missed. Accurate prediction in this sense refers to whether the status indicator confidence model agrees with status indicator that the event will occur at or prior to the expected time or not. For example, if the status indicator provides a high likelihood that the event will occur at or prior to the expected time, but the evidence (i.e. the features of the event record) and the learning of the confidence model suggest that is not the case, the confidence model may provide a low confidence in the status indicator.

In certain embodiments, an expected time may be a specific time and/or date, or the end of a period of time measured from the beginning of the digitalised process.

In certain embodiments, the status indicator confidence model may be trained using a machine learning algorithm and a plurality of past event records, the plurality of past event records being linked to a plurality of past digitalised processes, and each of the past event records comprising at least one: of a past expected time of an event, an indicator as to whether the event occurred at the past expected time; and a past status indicator that indicated the likelihood of the event occurring at the expected time. Using past event records and a machine learning algorithm means that the status indicator confidence model can be trained to generalise trends in past events of past digitalised processes as required. Furthermore, basing such training on a past expected time of an event, an indicator as to whether the event occurred at the past expected time, and/or a past status indicator that indicated the likelihood of the event occurring at the expected time allows the model to learn patterns between such factors, as well as evaluate how accurate or reliable the trained model is before being used with the first event record.

In certain embodiments, the first event record may further comprise a first event identifier of the first event, wherein each of the past event records further comprises a past event identifier and a version indicator, wherein a portion of the plurality of past event records has the same past event identifier and different version indicators. Using event identifiers and version indicators allows similar digitalised processes to be identified. Therefore, it is easier for the training algorithm and the status indicator confidence model to prioritise and find trends between similar digitalised processes, improving the reliability of the confidence model. The status indicator confidence model may be trained using gradient boosting. The status indicator confidence model may be a tree-based model and the tree-based model is trained using tree boosting.

In certain embodiments, at least one of the plurality of past event records and/or the first event record may further comprise a plurality of distinct indicators. In such embodiments, the distinct indicators may include any one of: an amount of the digitalised process that had been completed at the point the event record was created; or an amount of a resource used in the digitalised process that was utilised or was available for use by the digitalised process at the point the event record was created. Distinct indicators provide easy to process features from which the status indicator confidence model can identify trends and learn from with minimal additional computation necessary.

In certain embodiments, at least one of the plurality of past event records and/or the first event record further comprises a free-text comment. In such embodiments, the free-text comment may outline reasons for the status indicator to have been set at a specific likelihood. Free-text comments allow context and more complex descriptions of how the digitalised process or the first event of the digitalised process is performing to be provided. This allows the status indicator confidence model to learn from a broad range of information that may not otherwise be recorded by the event record.

In certain embodiments, the method may further comprise, if the flag for the first event record has been set, receiving either a revised expected time of the first event and/or a first status indicator from the status indicator confidence model.

In certain embodiments, the first event record may be obtained from a user, and the method of the first aspect may further comprise notifying the user if the flag for the first event record has been set.

In certain embodiments, the method may further comprise allocating further resources to the digitalised process in response to either: the first status indicator indicating a low likelihood of the first event occurring at the first expected time and the flag for the first event record not being set; or the first status indicator indicating a high likelihood of the first event occurring at the first expected time and the flag for the first event record being set. Allocating further resources provides a means for the method to reduce the likelihood of the event not occurring at the expected time.

In certain embodiments, the method may further comprise receiving a justification of the first confidence score from the status indicator confidence model; and optionally wherein the justification is based on a Shapely Additive Explanation (SHAP) algorithm. By considering the justification for the confidence score, a user can understand the important factors in determining how the status indicator came to its conclusion. This means that the user can then address those factors to improve the digitalised process as well as troubleshoot any problems in the training process if it is clear that the status indicator confidence model is relying on features that should not be relevant.

In a second aspect of the invention, there is provided a computer comprising a processor and a memory, the memory containing computer-readable instructions which, when executed on the processor, cause the processor to perform the method of the first aspect of the invention.

In a third aspect of the invention, there is provided a (non-transitory) computer-readable storage medium containing computer-readable instructions which, when executed by a computer, cause the computer to perform the method the first aspect of the invention.

### Brief Description of the Drawings

Embodiments of the invention are described below, by way of example, with reference to the following drawings, in which:
Fig. 1A shows a computing device in which the methods of the invention may be implemented. Fig. 1B shows components of the system memory of the computing device of Fig. 1A in further detail. Fig. 1C shows components of the storage media of the computing device of Fig. 1A.
Fig. 2 depicts a method according to the invention for handling events for digitalised processes.
Fig. 3 depicts a method according to the invention for training a status indicator confidence model for use in the method of Fig. 2.
Fig. 4 depicts the Receiver Operating Characteristic (ROC) curve of an exemplary status indicator confidence model.
Fig. 5 depicts the Precision vs Recall plot of an exemplary status indicator confidence model.

### Detailed Description

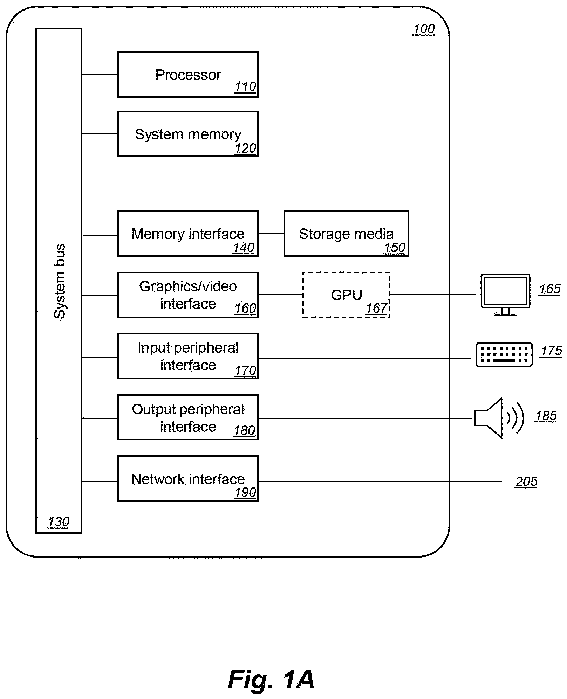

Fig. 1A shows an example computing device 100 in which the methods of the invention may be implemented. Computing device 100 may be embodied as any type of computer, including a server, a desktop computer, a laptop, a tablet, a mobile device, or the like.

Components of computing device 100 include, but are not limited to, a processor 110, such as a central processing unit (CPU), system memory 120, and system bus 130. System bus 130 provides communicative coupling for various components of computing device 100, including system memory 120 and processor 110. System bus 130 may be or may include an address bus, data bus or control bus. Example system bus architectures include parallel buses, such as Peripheral Component Interconnect (PCI) and Integrated Drive Electronics (IDE), and serial buses, such as PCI Express (PCIe) and Serial ATA (SATA).

System memory 130 is formed of volatile and/or non-volatile memory such as read only memory (ROM) and random-access memory (RAM). ROM is typically used to store a basic input/output system (BIOS), which contains routines that boots the operating system and sets up the components of computing device 100, for example at start-up. RAM is typically used to temporarily store data and/or program modules that the processor 110 is operating on.

Computing device 100 includes other forms of memory, including (computer readable) storage media 145, which is communicatively coupled to the processor 110 through a memory interface 140 and the system bus 130. Storage media 145 may be or may include volatile and/or non-volatile media. Storage media 145 may be or may include removable or non-removable storage media. Storage media 145 may be within computing device 100 or external to computing device 100. Examples storage media 145 technologies include: semiconductor memory, such as RAM, flash memory, solid-state drives (SSD); magnetic storage media, such as magnetic disks; and optical storage, such hard disk drives (HDD) and CD, CD-ROM, DVD and BD-ROM. Data stored in storage medium 145 may be stored according to known methods of storing information such as computer readable instructions, data structures, program modules or other data, the form of which is discussed further herein.

In some embodiments, such as the one shown in Fig. 1A, computing device 100 is communicatively coupled to an external display device 155 via a graphics/video interface 150 and system bus 130. Alternatively, computing device 100 may have an integrated display (not shown) which is communicatively coupled via the graphics/video interface 150 and system bus 130. Optionally, a graphical processing unit 157 (GPU) may be used in addition to improve graphical and other types of processing.

Computing device 100 also includes an input peripheral interface 160 and an output peripheral interface 170 that are communicatively coupled to the system bus 130. Input peripheral interface is communicatively coupled to one or more input devices 165, for interaction between the computing device 100 and a human operator. Example input devices 165 includes a keyboard, a mouse, a touchscreen, and a microphone. In some embodiments, the touchscreen and display may use the same screen. Output peripheral interface 170 is communicatively coupled to one or more output devices 175. Example output devices 175 includes speakers and a printer. The communicative coupling may be wired, such as via a universal serial bus (USB) port, or wireless, such as over Bluetooth.

Computing device 100 operates in a networked or distributed environment using at least one communication network 205 to one or more remote computers. The one or more remote computers may be a personal computer, a server, a router, a peer device, a mobile device, a tablet, or other common network node, and typically includes many or all of the components described above relative to computer system 100. The at least one communication network 205 typically includes at least the Internet. Other communication networks 205 may be used including a local area network (LAN) and/or a wide area network (WAN). Further communication networks may be present in various types of computing device 100, such as mobile devices and tablets, to cellular networks, such as 3G, 4G LTE and 5G. Computing device 100 establishes communication with network environment 200 through network interface 180. In a networked environment, program modules depicted relative to computer system 100, or portions thereof, may be stored in the remote memory storage device.

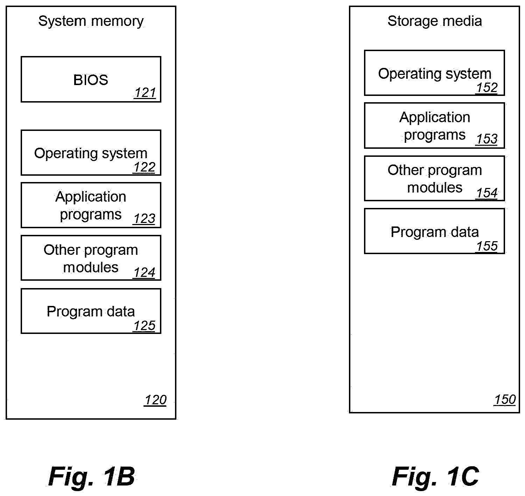

As shown in Fig. 1B a number of program modules are stored on the system memory 120, including an operating system 122, one or more application programs 123, other program modules 124, and program data 125. Similarly, as shown in Fig. 1C, storage media 150 stores one or more application programs 153, other program modules 154, and program data 155.

In one implementation, the methods of the invention may be implemented as an application program 123 that is stored in storage media 150. The advantage of implementing the methods of the invention in this way is that the application program 123 can be implemented on existing computing systems 100. However, in general, when implemented this way, the application program 123 usually has to be manually chosen to process processing tasks. The input dataset 25 may be received via network interface 190 and stored in the storage media 150. The output dataset 27 may be sent elsewhere via network interface 190. The processing of the steps in between are performed by processor 110 in conjunction with the application program 123. System memory 120 may be used to store temporary or transitory data relating to the application program 123.

In another implementation, the methods of the invention may be implemented in the operating system 122 that is stored on system memory 120.

### Overview of Method

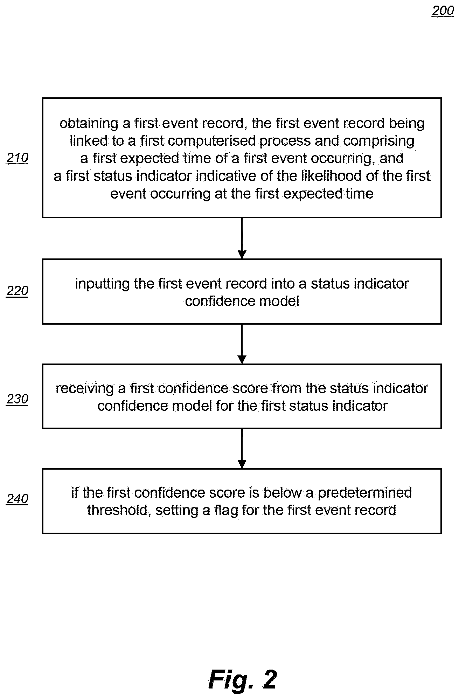

Fig. 2 outlines a method 200 according to the invention for handling events for digitalised processes. In step 210 the method 200 comprises obtaining a first event record, the first event record being linked to a first digitalised process.

The digitalised process may be any process that can be operated on a computer for example the systems outlined in relation to Fig. 1. As an example, these processes may relate to the operation of the computer hardware such as a standard computer processing task operating on a multi-core processor. Alternatively, the digitalised process may relate to the efficient operation of the software running on a processor, such as the installation of new software. The digitalised process may be completely autonomous, that is, once the digitalised process has begun, the user does not interact with the steps of the digitalised process itself. Alternatively, the digitalised process may be a manual process where a user is working with a processor and produces event records to track the work that is being done. Further alternatively, the digitalised process may be semi-autonomous, with the digitalised process periodically reporting to a user who can then assess and intervene in the process should it be desirable, such as to ensure that the events of the digitalised process completes at an expected time.

Each digitalised process may contain one or more events, each event having a separate event record. For instance, a digitalised process may have a first and a second event, and thus a first event record and a second event record. Alternatively, a single event may have multiple event records sampled at different times. For example an event record may be created to track whether an expected time is accurate periodically during the digitalised process.

An example of an event record is provided in Table I. The event record comprises at least an expected time of an event and a status indicator indicative of the likelihood of the event occurring at the expected time. The event record may be stored in the system memory 120 or storage media 150 as program data 125 or 155 respectively. The event record may be created by either of the application programs discussed separately, or the digitalised process may be running on a remote system and the event record is sent over the network interface 190.

**Table I**

| **Event record** | |
|---|---|
| Expected time of completion | 30 minutes |
| Status indicator of completion by expected time | Likely |
| Processor Cores allocated | 4 |
| Processor Cores in use | 2 |
| Proportion of task completed | 60% |
| Event identifier | Software installation |
| Version identifier | 5 minutes into process |
| Free-text comment | "*All drivers up to date No conflicting installation System requirements met"* |

The expected time may be stored in various formats. For instance, the expected time may include a time of day (e.g. 15:41 :00), a timestamp indicating a period of time from when the digitalised process began, a timestamp indicating a period of time from when the previous event occurred, or some other indicator of time. The expected date may include a calendar date (e.g. 20 July 2023), a number of days from when the digitalised process began, a number of days from when the previous event occurred. Any combinations of the expected times and dates mentioned may be used. For instance, the expected time and date may be a calendar date and a time of day.

The event represents a milestone in the digitalised process. For example, the event may be the completion of the digitalised process or it may be a point in the digitalised process where a change is required such as a manual intervention or the addition of further resources to the digitalised process so that the next stage of the digitalised process can begin. Returning to the software installation example, a milestone may be the completion of a specific step such as the checking of system requirements or it may be the completion of the task as a whole i.e. the successful installation of the software. A point where a manual intervention may be required is to approve the terms and conditions of the software or input an administrator password to authorise the continuation of the installation process. Alternatively, in the parallel processing example, a plurality of processor cores may be working independently, but the final stages of the process requires the separate outputs of each processor core to be combined and so the milestone is the point in the digitalised process where only one of the processor cores are still required to complete the task and the remaining cores can go into a sleep state.

The status indicator provides a likelihood that the event will occur at the expected time. The status indicator may be *"likely", "neither likely nor unlikely"* or *"unlikely".* It will be appreciated by the skilled person that more or less than three levels could be used. Alternatively, the indicator may be any numeric scale with one end being the most likely that the event will occur at the expected time, and the other end being the least likely that the event will occur at the expected time or vice versa. For example, the status indicator may be a numeric scale from 1 to 5 with 5 being highly likely, and 1 being least likely. It would be appreciated by the skilled person that any number of discrete levels could be used such as a scale from 1 to 10 or 1 to 3. Further alternatively, the indicator may be a continuous scale such as a probability between 0 and 1.

The event record may optionally comprise further data. For example, a plurality of distinct indicators may be included that quantify aspects of the digitalised process. Such indicators may provide information that indicates any one of: an amount of the digitalised process that has been completed, an amount of a resource used in the digitalised process that is currently utilised or the amount of a resource available for use by the digitalised process. Other distinct indicators are also possible to provide a self-contained metric on which the digitalised process can be assessed. Such distinct indicators provide additional context to the status indicator such that it can be understood why a status indicator is given a particular value. For example, if the distinct indicators show that the digitalised process is 90% complete, and the expected time is a relatively long time away, then it can be understood why the status indicator shows a high likelihood of reaching the first event at the expected time. Conversely, if the distinct indicators show that the digitalised process is only 10% complete but the expected time is relatively close then it can be understood why the status indicator shows a low likelihood of reaching the first event at the expected time.

The event record may additionally or alternatively include a free-text comment that justifies the first status indicator. Such a free-text comment may be generated during the digitalised process and may include logs or explanations of how the process has been operating up to that point. The free-text comment provides further explanation or justification for the status indicator that would not be appropriate to categorise into a distinct status indicator, such as an assessment that is difficult to quantify as a single metric, or disruption or noise in the process that had not previously been anticipated. An example of a free-text comment may include the terminal print outs during a software installation process where each step of the software installation has been logged on a common PC terminal such as a Linux terminal or Windows Powershell. Alternatively a free-text comment may be input from a user that is monitoring the process.

The event record may additionally include an event identifier. The event identifier classifies the digitalised process such that a user observing the event identifier will recognise the type of digitalised process being performed and the event that is to occur. For example, the event identifier may identify the digitalised process as a software installation process and the event as the completion of the installation. Additionally or alternatively, the event identifier may identify the resources being used to carry out the process. For example, the event identifier may indicate the specific server or processors that are operating the digitalised process.

The event record may additionally include a version identifier. The version identifier is used to differentiate entries from the same digitalised process that may have been recorded at different times. For example, the version identifier may simply be a timestamp of how long the process has been running. Alternatively, the version indicator may be an index that increments for each event record made for a digitalised process, for example the first created event record in the process may have a version indicator of 1, the second created 2 and so on.

Returning to Fig. 2, method 200 further comprises step 220, inputting the first event record into a status indicator confidence model. The status indicator confidence model assesses all the features of the first event record (expected time, first status indicator, free-text comment, distinct indicators etc.) and produces a first confidence score for the first status indicator, that provides a confidence that the status indicator is accurate. Accurate in this sense refers to whether the status indicator confidence model agrees with status indicator that the event will occur at or prior to the expected time or not. For example if the status indicator provides a high likelihood that the event will occur at or prior to the expected time, but the evidence (i.e. the features of the event record) and the learning of the confidence model suggest that is not the case, the confidence model may provide a low confidence in the status indicator. The specific details of the status indicator confidence model are discussed in greater detail below. The step of inputting the first event record to the confidence model may be automated, that is, once a first event record is created by the digitalised process it is input straight into the confidence model. Alternatively, the first event records may be stored until it comes to reviewing the first event record and the user can choose to input the record into the status indicator confidence model.

Step 230 of method 200 comprises receiving the first confidence score from the status indicator confidence model for the first status indicator. While it is possible that the first status indicator could instead be simply replaced with a confidence model that takes in the remaining data, (as opposed to receiving a likelihood and then determining a confidence in that likelihood), there are two main benefits of using a separate confidence value. Firstly, the method can be applied/retrofitted to an existing process that may be able to take in additional context such as the knowledge of other processes sharing a resource. Secondly, unlike the status indicator confidence model, legacy systems may not be able to actively learn and may always give the same likelihood if the same conditions exist even if additional factors have end up causing the likelihood to not be accurate.

Optionally the method may also comprise receiving a justification of the first confidence score from the status indicator confidence model. The justification may be a simple list of the features that were important in a given determination of the status indicator confidence model. Alternatively, they may be a text-based justification such as a human-readable piece of text that outlines why the status indicator confidence model provided the output it did. This may be by describing particular features that were important to the conclusion the status indicator confidence model made. Further details of how the justification is generated will be discussed in more detail below.

Step 240 of the method comprises setting a flag for the first event record if the confidence score is below a predetermined threshold. Optionally, the flag may be a first flag indicating a low confidence that the status indicator is accurate, and the method may further include determining if the first confidence score is below a second predetermined threshold and setting a second flag for the first event record, the second flag indicating a medium confidence that the status indicator is accurate, wherein the second predetermined threshold is higher than the first predetermined threshold. More than two flags may also be used with further thresholds to provide any number of discrete levels for flags of varying severity.

A flag may be represented as separate Boolean variables for each threshold level or may be represented as a single integer indicating the number of flags that have been set, and by extension the number of thresholds that have been breached. The flag may be set a low level in a register of a processor running the digitalised process or method 200. If any flag is set, this may also be presented to a user on display 165 using a symbol or icon.

In response to a flag being set there are several optional steps that may be included in method 200 that addresses this condition.

Method 200 may include, if the flag has been set, determining either a revised expected time of the first event and/or a revised first status indicator, using the status indicator confidence model. More detail regarding the status indicator confidence model will be given below.

Additionally or alternatively, method 200 may include allocating further resources to the digitalised process in response to either: the first status indicator indicating a low likelihood of the first event occurring at the first expected time and the flag for the first event record not being set; or the first status indicator indicating a high likelihood of the first event occurring at the first expected time and the flag for the first event record being set. Effectively, if the status indicator confidence model suggests that the expected time may be missed, more resources should be allocated to the digitalised process to allow the process to catch up with the process schedule. In the computing examples discussed previously, such resources may include providing more computer memory for the task, allocating further processor cores or increasing the clock speed of a core. Alternatively, the resources may involve un-allocating resources from other digitalised processes for the current digitalised process such as other digitalised processes that are running on the same hardware.

Additionally, in response to the flag being set, the user may be notified that the flag has been set. This may be through an alert presented on display 165 in order to make the user aware that a manual intervention may be required.

### Status Indicator Confidence Model

The status indicator confidence model is a model that is used to determine a confidence that the first status indicator is accurate. The model receives as an input an event record, such as the first event record of Table I which may include the features of the first event record described above. The output of the status indicator confidence model is a confidence value. This may take the form of a continuous probability from 0 to 1 inclusive, or may be a set of discrete values from a low confidence to a high confidence.

The status indicator confidence model is trained using machine learning. Many suitable machine learning models may be used for the status indicator confidence model. For example, the machine learning models may include random forests, neural networks, support vector machines, Bayesian predictors, hidden Markov chains or any suitable model that is capable of receiving an event record as an input and outputting a confidence value.

In order to train the model, a set of past event records are used. The past event records are each associated with a past digitalised process of a plurality of past digitalised processes. The past event records include at least some of the same features as the event that is received in method 200. An example of an event record is shown in Table I. However, because the event has already occurred for the past event records, compared to the event records, the past event records do not have an expected time that an event will occur. The past event records instead each comprise at least one of: a past expected time of a past event (and optionally the actual time that the event occurred); and an indicator as to whether the past event occurred at the past expected time. The past expected time is the time at which the event was expected to occur when the event record was made. This is so that during training, the status indicator confidence model can receive a past event record as if it were a real event record, provide a confidence in the first status indicator, and then determine whether the confidence value was appropriate based on whether the expected time was missed or not and can learn appropriately. In addition, the past event record may comprise a past status indicator that indicated the likelihood of the past event occurring at the expected time. In other words, the past event records are previous event records that may have been used in method 200 of Fig. 2, at least prior to the event occurring at which point it becomes a past event.

Similar to the event record, each of the past event records may also include a free-text comment or plurality of distinct indicators as discussed above. However, not all of the past event records of the plurality of past event records require all of the same features. Should a particular feature be missing from a past event record, the data may be cleaned to either estimate what those features should have been, or to mask them within the model. Features may be missing from the past event records for a variety of reasons. For example, depending on the age of the data, the past event records at the time may not have recorded certain features which are included in the digitalised process now. Alternatively, certain features may have become corrupted or, in the case of any manual or semi-autonomous digitalised processes where recording of event record features may be done by a user, details may simply have been omitted. Nonetheless, training the confidence model with incomplete past event records will also help build redundancy into the confidence model such that it is not reliant on a small number of features to determine the confidence of the status indicator.

Each of the past event records may also include a past event identifier. The past event identifier is similar to the event identifier described above, but is instead associated with the past digitalised process on which a given past event record is based. The past event identifiers of the plurality of past event records may indicate a range of tasks and resources associated with the plurality of past digitalised processes such that the confidence model is able to analyse any input event record and provide a confidence score for a digitalised process that may have similar event identifiers. Additionally, the past event identifier may indicate that the plurality of past digitalised processes share the same or similar resources (i.e. that the past digitalised processes were run on the same servers as the digitalised process), that they involve the same or similar task, or a combination of the two. This means that when the confidence model is trained and used, the confidence model is able to give more weighting to past events that have similar tasks to the first digitalised process and improve the accuracy of the model.

In creating the set of past event records, several entries in the set may be related to the same digitalised process but at different times during the process. For example, there may be 3 past event records that relate to the same process but are samples of the process at different times and so may have different status indicators or other different features present in the event record. The number of event records related to a past digitalised process does not need to be 3 and may be more or less than 3. For example, a digitalised process may provide an event record every 5 minutes for the 30 minutes it is running. Alternatively, a digitalised process may not run continuously but is instead only updated every few months to gather new data, in which case there may be an event record every month over the course of several years. As a part of the set of past event records on this would provide 6 entries. The set of past event records may be pre-processed to ensure that there is a balance between those expected times that were missed and those that were not. This will prevent the status indicator confidence model from overfitting to the data and simply guessing a certain confidence for a majority of cases regardless of the input.

When training the status indicator confidence model, the parameters of the model may be randomly initialised. The past event records will then be input through the confidence model, and the outputs are then compared to whether the past status indicator was accurate. Based on this comparison, the parameters of the model can then be adjusted in order to improve the accuracy of the model in providing a confidence in the status indicator. In effect, the confidence model observes whether the event occurred at the past expected time, and determines whether the first status indicator provided accurate information.

Such a training process may be based on a simple gradient descent algorithm, where the output of the status indicator confidence model is compared with the past expected time and past status indicator in a cost function which can be evaluated.

Alternatively, the training process can make used of gradient boosting, such as Extreme Gradient Boosting (XGBoosting). If the confidence model is made of decision trees, the training process may comprise tree-boosting.

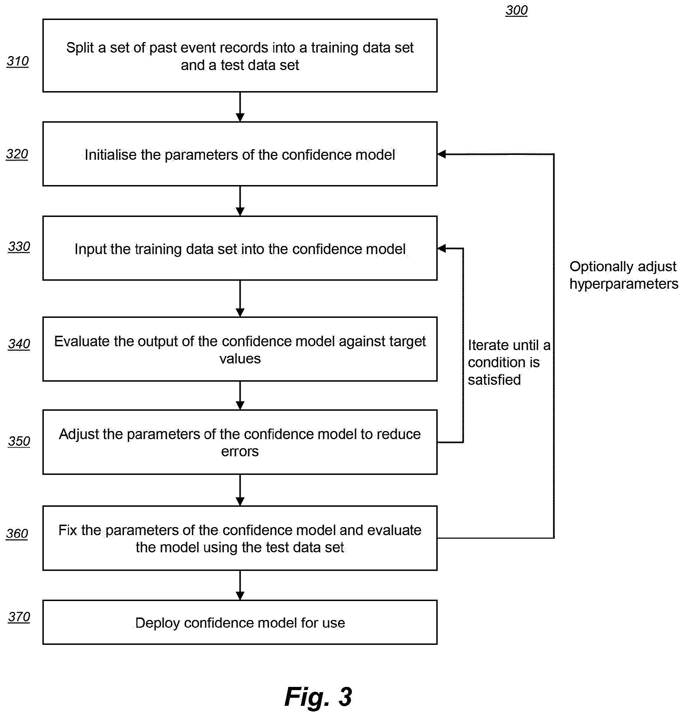

Fig. 3 outlines a method 300 of training a first status indicator confidence model. In step 310 the set of past event records are split into a separate training data set and test data set. Optionally the past event records are also split into a separate validation data set. A past event record should only appear once across all two (or three) sets. Typically, the training data set will comprise the majority of the past event records, for example 80%, but any proportion of past event records may be used for each set. Ideally each set should have a balance of past event records where the expected time was missed or not. For example, 60% of the pass event records in the training data show the expected time was not missed, and 40% show the expected time was missed. Other ratios are possible, and it is desirable that the sets have a proportion of met and missed expected times so that the confidence model does not simply learn to predict one outcome.

In step 320, the parameters of the confidence model are initialised. Preferably, they are set randomly but they may be all set to the same non-zero value or set based on some other pattern that is suitable for the specific model being used in the confidence model.

In step 330, the training set is input into the confidence model, and the output is evaluated (step 340) in an iterative process by comparing the output to target values. An example of target values may be a 0 or 1, where a 0 is used for past event records in the training data set where the status indicator indicates that it is more likely than not that the event will occur at or prior to the past expected time but the past expected time and or date was actually missed or vice versa, and a 1 is used for past event records in the training data set where the status indicator indicates that it is more likely than not that the event will occur at or prior to the past expected time and this turned out to be the case or vice versa. Alternatively, 0 may be used where it is known that the event actually occurred after the past expected time, and 1 may be used where it is known that the event actually occurred before the past expected time.

In step 350, depending on how wrong or correct the confidence model's output is, the parameters can be adjusted to reduce the error in the confidence model. In a gradient descent algorithm this is done by finding the gradient of a cost function, the cost function capable of quantifying a residual (the size of the error of the model's output) for the training data set, and adjusting the parameters in the direction of steepest gradient. This process is repeated until the change in the parameters between each iteration becomes relatively small or after a fixed number of iterations. In a gradient-boosting algorithms, such as XGBoosting, a plurality of weak learners (i.e. simple functions) are sequentially combined, each new weak learner optimised to reduce the residuals of the combination or learners that have been used previously. For instance, a first learner may be look at an average of the data, a second learner would then be fit to the error in prediction that the first learner has and so on. Other thresholds than simply more likely than not (i.e. more than a 50% likelihood) can also be used to determine what the target variable for a past event record should be.

Regardless of the choice algorithm, once the iterative process is complete in step 370 the parameters of the model are fixed and then the test data is used to evaluate how the model predicts for unseen data. In particular, this stage is used to assess whether a model has overfit, that is, the model has effectively 'memorised' the test data without understanding any wider patterns and so is ineffective with new data. Should the test data show that model has overfit, or there is some other problem with the performance, the method may return to step 330 and the model is re-trained with modifications to the structure of the model, such as a change in hyperparameters.

The train and test steps may be a k-fold cross-validation process. In a k-fold cross-validation process the data (i.e. the set of past event records) are split into k even chunks, for example 5 even chunks. One of those chunks is chosen as the test data and the other k-1 (for example if k is 5, the remaining 4 chunks) are combined into the training set. The test and training steps are then repeated with a different chunk of the k chunks chosen as the test data until all k chunks have been used as the test data once.

Because the model may be re-trained in response to the test data, the test data itself has an impact on the overall model. This is also known as data leakage. Therefore, if a validation data set has been used, once the performance of the model on the test data is satisfactory, the method 300 may include using the validation data to evaluate the model to confirm that the performance of the model is as expected. As an alternative, if the model is not re-trained the validation set is not necessary and the training data serves the same purpose.

Finally in step 370 the confidence model is deployed for use in method 200.

It is not strictly necessary that the past event records contain a past status indicator, or that the past status indicator is used in the training process. Instead, the status indicator confidence model can train to simply provide a confidence that the event will occur at the expected time, akin to providing its own status indicator based on the inputs provided. In deployment, this confidence that the event will occur at the expected time can be mapped onto a confidence in the first status indicator by simply considering if the two agree. For example if the confidence provided by the status indicator confidence model is low and the first status indicator is low, the confidence in the first status indicator is high and vice versa.

In addition, or alternatively to providing a confidence in the status indicator, the model can also be trained to provide a revised expected time. To provide this functionality the past event records require the actual time the events in the past digitalised processes occurred. When training, rather providing an output that classifies the status indicator with a probability of how accurate the status indicator is, the confidence model may in addition or alternatively to the functionality described above provide a new expected date that the event will occur. During training, rather than simply assessing with the status indicator was correct, the model provides an updated expected time and compares this with this actual time the events in the past digitalised processes occurred, with the goal of minimising the difference between the two.

If the confidence model is trained to provide a revised expected time, the revised expected time can be mapped onto a confidence in the status indicator and can be output as the confidence value used in method 200. For example, if the updated expected time is a relatively long way away from the expected time and or date, but the status indicator provides a high likelihood that the event will occur prior to on at the expected time, the status indicator confidence model may provide a low confidence since there is a large discrepancy between the expected and updated time.

Additionally, or alternatively to providing a revised expected time, a revised status indicator can also be provided. For example, if the first or past status indicators are chosen from one of *"likely", "neither likely nor unlikely"* or *"unlikely"* that the event will occur at the expected time, during training, the model may be trained to provide its own status indicator based on the inputs of the past event records and when the past expected date is. Alternatively, if the status indicator confidence model determines a low confidence in this status indicator, then it may provide a revised first status indicator that changes based on how low the confidence is. For example, if there is a high confidence, then the revised status indicator will stay the same, but if the first status indicator is *"likely"* but the confidence is low, it the revised first status indicator may be *"neither likely nor unlikely"* or *"unlikely"* based on how low the confidence actually is. It will be appreciated that a revised status indicator is possible for any form of status indicator, not just those chosen from *"likely", "neither likely nor unlikely"* or *"unlikely"* and these options for the status indicator are merely exemplary.

As mentioned previously, the status indicator confidence model may also output a justification of the confidence that it outputs. The basis of this justification is an analysis of the features used in the confidence model and how a change in the value of one of those features would affect the output of the model. One possible justification algorithm that is used to generate these justifications is the Shapely Additive Explanation (SHAP) algorithm. This algorithm takes a game-theoretic approach to explain the output of a machine learning model such as the status indicator confidence model of the present invention. In particular, a SHAP algorithm calculates the Shapely values for observed features to assess the contribution of each features to a given output. Such an algorithm can be applied to nearly any machine learning model, and can also be used to assess natural language, such as the contribution of the free-text comment (discussed further below). While the output of such an algorithm may provide insights into a given decision, it can be difficult to interpret for someone not skilled in machine learning. Therefore, the justification may be passed through a further algorithm that converts the justification into a text-based explanation that can be read by a user. Such an algorithm may be a simple template to the effect of *"There is a X confidence in the status indicator, of particular importance is the feature of Y in coming to this conclusion"* where X and Y are substituted for the confidence score and the most important feature determined from the justification algorithm respectively. Alternatively, the output of the justification may be input into a large language model such as Chat GPT to generate a more dynamic explanation that can consider similarly important features in an appropriate manner.

Preferably the status indicator confidence model is a tree-based algorithm using XGBoosting and the SHAP algorithm to justify the output of the decision trees.

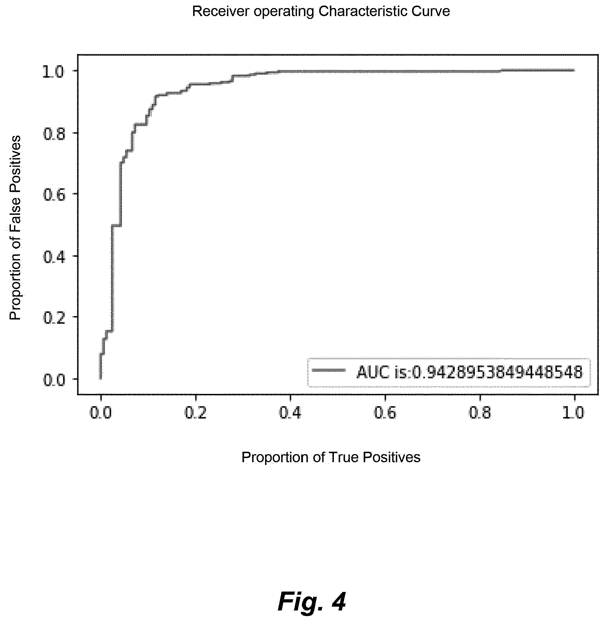

Fig. 4 shows a Receiver Operating Characteristic curve for a status indicator confidence model trained on training set of 21,198 past even records and validated on a validation set of 448 different past event records. This figure plots the number of True Positives against False positives of the status indicator confidence model as the threshold for which the flag is set (step 240 of method 200) is varied. A true positive is where the status indicator confidence model would cause the flag to be set (see method 200 step 240), indicating a low confidence in the status indicator and the indicator turned out to be inaccurate i.e. where the status indicator indicates a high likelihood of the event occurring at the expected time and the expected time actually being missed. A false positive is where the flag is set but the status indicator turned out to be accurate.

Overall, this model shows an accuracy of 89% with an Area under the ROC curve of 0.943.

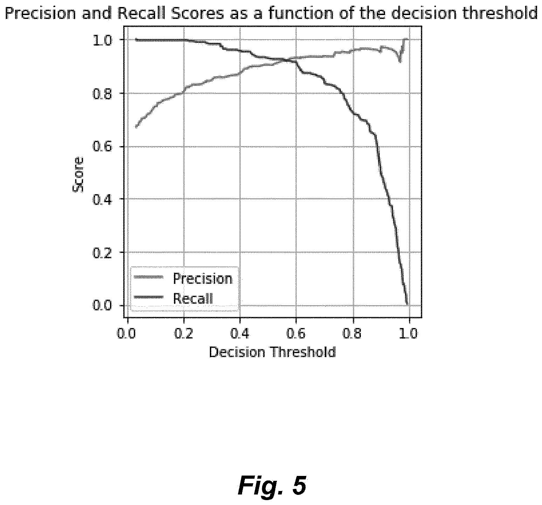

Fig. 5 shows the precision vs. recall of the status indicator confidence model as the threshold is varied. Precision relates to the number of positive identifications that were actually correct i.e. the proportion of true positives out of all the positive indications from the status indicator confidence model and recall relates to the number of actual positives that were correctly identified i.e. the proportion of true positives out of all the predictions that should have been positive.

### Processing of Free-Text Comment

The free-text comment provided with any event record, be it the past event record of the training data or the event record used in the method 200, needs to be processed into a group of features that the status indicator confidence model can understand. As mentioned previously, the free-text comment may be the terminal output from the digitalised process, a software log, or a manual input from a user monitoring the process. The free-text comment may provide additional context or information that would not be appropriate to categorise into a distinct indicator.

The processing of the free-text comment can be done using a number of preprocessing algorithms before being fed into the status indicator confidence model. Such algorithms may include Term Frequency-Inverse Document Frequency (TFIDF), word2vec, bag of words, or other appropriate natural language processing model that may add semantic context to the data being input into the status indicator confidence model.

Such processing allows patterns between the words in the free-text comment and the status indicator to be learned. For example, the appearance of words such as *"error", "unavailable", "delay"* or other words with negative connotations may suggest that the first status indicator should indicate a lower likelihood.

In the case of TFI DF and bag of words, these are simple language models that count the occurrence of words in a piece of text and allows the status indicator confidence model to learn features and trends during training based on how often they occur in a given piece of text (such as a free-text comment) relative to the corpus of language provided (such as a set of all the free-text comments being trained on). It is then possible for the status indicator confidence model to learn words that occur regularly when the expected time is missed or achieved.

Using an algorithm such as word2vec may also allow semantically similar words to be trained without directly having samples for them. For example, a word2vec model may provide similar vector representations to the words *"incorrect"* and *"error"* and so, without any past event record using the word *"incorrect"* the status indicator confidence model would still be able to apply the learning of the presence of *"error"* in past event records to the presence of *"incorrect"* in the first even record. A word2vec algorithm may be pre-trained on a large corpus of text (including more than free-text comments) before the training of the status indicator confidence model. Alternatively, the word2vec algorithm may be incorporated into and trained with the status indicator confidence model.

### Example Applications

Method 200 according to the invention has many possible applications across purely automated digitalised processes, semi-autonomous processes or manual processes. The method also can apply to processes at a software level, such as the efficient running of software processes, at a hardware level, such as the allocation of resources between hardware elements and at a systems level, such as the monitoring and operation of digitalised systems over a long period. Outlined below are some examples of such processes and how the method 200 can be applied to them.

### a) Example 1 - Software installation

The process of installing software on a computer can include many steps. For example, installing software may include:
- Checking system requirements
- Downloading installation files
- Uninstalling old drivers
- Uninstalling old versions of the software
- Updating drivers
- Unpacking and locating installation files
- Completing the installation
- Clean up

The performance of a digitalised process such as installing software may vary. For example the installation of a simple command line program such a GREP requires little to no drivers and is a relatively small program. Conversely, the installation of a modern video game requires checks on the graphics drivers and can be well over 50GB in size.

Possible event identifiers associated with this process may be "Software installation, command line" or "Software installation, video game".

The version identifier may include the amount of time that has passed since the digitalised process began or it may be the proportion of the task that has been completed.

Distinct indicators may include the processor cores in use, download speed from an internet connection, processor speeds, proportion of installation completed or other suitable performance metric from the computer that is running the digitalised process, such as the computer described in relation to Fig. 1. Regarding specifically the proportion of installation completed, this can be measured as either the number of completed tasks out of the total tasks to be completed in the process or the tasks may be weighted based on their importance, for example the download of the installation files may represent 50% of the proportion when completed, whereas checking installation requirements may only represent 5% of the proportion when completed.

The free-text comment may be a console log that outputs any command line processes as they complete and show any errors as they occur. For example the free-text comment may include details as to whether the system requirements were met, whether there were any issues downloading the installation files, details as to any updates or uninstalls of any drivers or any other status information that may be relevant to the computer installation process.

The expected time to completion may be initially calculated by the installation file size. For example it may be assumed that certain steps always take the same amount of time, such as checking system requirements, whereas other steps are proportional to the size of the installation files such as the time it takes to download the installation files.

### b) Example 2 - Computer compiler

The process of compiling computer software includes many steps, and may be parallelised across several processor cores in order to reduce compilation time. The steps of this process may include:
- Tokenising source code
- Parsing the tokenised source code for semantic analysis
- Assembling object files
- Linking object files
- Optimising the code of the linked object files
- Producing executable machine code

One of more of these steps may be executed independently across several different processor cores. For example, it is common that a computer program comprises of many separate files of source code. Each separate file can be made into an object file independently before they are all linked together and so each object file can be assembled on a different processor core.

The performance of a compilation process may vary. For example the size of the source code files or whether the code has been split across several files may impact the speed with which the code can be compiled. In addition, the more parallel hardware available for the digitalised process will also impact run time.

### c) Example 3 - Environment monitor

As an example of a long term digitalised process, consider an environment monitor that monitors environmental parameters in an area such as the temperature, oxygen levels and air quality in an office. The goal of a digitalised process may be to gather a certain number of samples over a certain period. For example, an environmental sensor may be configured to gather 90 samples daily with an expected time of completion being 90 days' time. However, there may be multiple factors that affect the environment sensor which means it may not gather a sample on a particular day. Such factors might include
- The environment sensor running out of power.
- No suitable storage remaining on the sensor.
- Specific sensor elements becoming broken or requiring maintenance.

As a result, a user may regularly check on the environmental sensor and an event record may be produced which combines automated status information from the sensor along with a maintenance assessment of the user. For example, distinct status indicators may include current battery life, the number of samples gathered, and storage space remaining on the sensor, whereas the free text comment may also include additional comments such as a description of how clean the sensor is and whether parts of the sensor may require fixing or system logs of the sensor. Alternatively the distinct status indicators may be set by the user and may include more subjective information such as anticipated time until maintenance is required or an estimate of how busy the office is in the vicinity of the sensor.

The status indicator of the event record may be determined by the sensor itself based on the measurements it makes, i.e. the sensor may determine a low likelihood of the event occurring if the battery power would not last until the first expected time. Alternatively, the status indicator may be determined by the user maintaining the sensor. While such an indicator may be more subjective, the user's experience and observations may improve how accurate the status indicator is. By using the status indicator confidence model that has been trained on other similar processes with lots of different users (including the user of the current process) some of the bias or uncertainty resulting from the subjectivity of a user-based status indicator can be removed. For example, if there are sufficient samples in the training data for the confidence model, the confidence model may learn that certain users underpredict or overpredict whether the sensor will receive all the necessary samples on time.

### General

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

Any methods disclosed in this invention may be implemented as instructions stored on a computer-readable storage medium which, when executed by a computer, cause the computer to perform the method. Such a computer may be any of the computer hardware discussed in this application.

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Embodiments

The following list provides embodiments of the invention and forms part of the description. These embodiments can be combined in any compatible combination beyond those expressly stated. The embodiments can also be combined with any compatible features described herein:
1. A method of handling events for digitalised processes, the method comprising:
   obtaining a first event record, the first event record being linked to a first digitalised process and comprising:
   a first expected time of a first event occurring, and
   a first status indicator indicative of the likelihood of the first event occurring at the first expected time;
   inputting the first event record into a status indicator confidence model;
   receiving a first confidence score from the status indicator confidence model for the first status indicator; and
   if the first confidence score is below a predetermined threshold, setting a flag for the first event record.
2. The method of embodiment 1, wherein the status indicator confidence model is trained using a machine learning algorithm and a plurality of past event records, the plurality of past event records being linked to a plurality of past digitalised processes, and each of the past event records comprising at least one of:
   a past expected time of an event;
   an indicator as to whether the event occurred at the past expected time; and
   a past status indicator that indicated the likelihood of the event occurring at the expected time.
3. The method of embodiment 2, wherein the first event record further comprises a first event identifier of the first event, wherein each of the past event records further comprises a past event identifier and a version indicator, wherein a portion of the plurality of past event records has the same past event identifier and different version indicators.
4. The method of embodiment 3, wherein the version indicator is a time.
5. The method of any one of embodiments 2 to 4, wherein the confidence model is trained using gradient boosting.
6. The method of embodiment 5, wherein the confidence model is a tree-based model and the confidence model is trained using tree boosting.
7. The method of embodiment 5, wherein the confidence model is trained using XGBoosting.
8. The method of any one of embodiments 2 to 6, wherein at least one of the plurality of past event records further comprises a plurality of past distinct indicators.
9. The method of embodiment 8, wherein the plurality of past distinct indicators quantify the past digitalised process.
10. The method of embodiments 8 or 9, wherein the past distinct indicators include any one of:
   an amount of the past digitalised process that had been completed at the point the past event record was created; or
   an amount of a resource used in the digitalised process that was utilised or was available for use by the digitalised process at the point the past event record was created.
11. The method of any one of embodiments 2 to 10, wherein at least one of the plurality of past event records further comprises a past free-text comment.
12. The method of embodiment 11, where the past free-text comment outlines reasons for the past status indicator to have been set at a specific likelihood.
13. The method of embodiment 11 or 12, wherein the past free-text comment is generated during the plurality of past digitalised processes for a user to review.
14. The method of any preceding embodiment, wherein the first event record further comprises a plurality of distinct indicators.
15. The method of embodiment 14, wherein the plurality of distinct indicators quantify the digitalised process.
16. The method of embodiment 14 or 15, wherein the distinct indicators include any one of:
   an amount of the digitalised process that has been completed; or
   an amount of a resource used in the digitalised process that is currently utilised or available for use by the digitalised process.
17. The method of any preceding embodiment, wherein the first event record comprises a free-text comment.
18. The method of embodiment 17, wherein the free-text comment outlines reasons for the status indicator to be set at a specific likelihood.
19. The method of embodiment 17 or 18, wherein the free-text comment is generated during the digitalised process for a user to review.
20. The method of any preceding embodiment, further comprising, if the flag for the first event record has been set, receiving either a revised expected time of the first event and/or a revised first status indicator from the status indicator confidence model.
21. The method of any preceding embodiment, wherein the first event record is obtained from a user, further comprising notifying the user if the flag for the first event record has been set.
22. The method of any preceding embodiment wherein the predetermined threshold is a first predetermined threshold and the flag is a first flag indicating a low confidence in the first status indicator, the method further comprising:
   if the first confidence score is below a second predetermined threshold, setting a second flag for the first event record, the second flag indicating a medium confidence that the status indicator is accurate, wherein the second predetermined threshold is higher than the first predetermined threshold.
23. The method of any preceding embodiment, further comprising allocating further resources to the digitalised process in response to either:
   the first status indicator indicating a low likelihood of the first event occurring at the first expected time and the flag for the first event record not being set; or
   the first status indicator indicating a high likelihood of the first event occurring at the first expected time and the flag for the first event record being set.
24. The method of embodiment 23 wherein the further resources are any of:
   computer memory;
   processor cores;
   higher clock cycles; or
   un-allocating resources from other digitalised processes that may be running on a computer hardware for the digitalised process to use.
25. The method of any preceding embodiment, further comprising:
   receiving a justification of the first confidence score from the status indicator confidence model.
26. The method of embodiment 25 wherein the justification is a text-based comment.
27. The method of embodiment 25 or 26 wherein the justification is based on a Shapely Additive Explanation (SHAP) algorithm.
28. A computer comprising a processor and a memory, the memory containing computer-readable instructions which, when executed on the processor, cause the processor to perform the method of any preceding embodiment.
29. A (non-transitory) computer-readable storage medium containing computer-readable instructions which, when executed by a computer, cause the computer to perform the method of any one of embodiments 1 to 27.

## Claims

1. A computer-implemented method of handling events for digitalised processes, the method comprising:
obtaining a first event record, the first event record being linked to a first digitalised process and comprising:
a first expected time of a first event occurring, and
a first status indicator indicative of the likelihood of the first event occurring at the first expected time;
inputting the first event record into a status indicator confidence model;
receiving a first confidence score from the status indicator confidence model for the first status indicator; and
if the first confidence score is below a predetermined threshold, setting a flag for the first event record.

2. The method of claim 1, wherein the status indicator confidence model is trained using a machine learning algorithm and a plurality of past event records, the plurality of past event records being linked to a plurality of past digitalised processes, and each of the past event records comprising at least one of:
a past expected time of an event;
an indicator as to whether the event occurred at the past expected time; and
a past status indicator that indicated the likelihood of the event occurring at the expected time.

3. The method of claim 2, wherein the first event record further comprises a first event identifier of the first event, wherein each of the past event records further comprises a past event identifier and a version indicator, wherein a portion of the plurality of past event records has the same past event identifier and different version indicators.

4. The method of claim 2 or 3, wherein the confidence model is trained using gradient boosting.

5. The method of claim 4, wherein the confidence model is a tree-based model and the confidence model is trained using tree boosting.

6. The method of any one of claims 2 to 5, wherein at least one of the plurality of past event records and/or the first event record further comprises a plurality of distinct indicators.

7. The method of claim 6, wherein the distinct indicators include at least one of:
an amount of the digitalised process that had been completed at the point the event record was created; and
an amount of a resource used in the digitalised process that was utilised or was available for use by the digitalised process at the point the event record was created.

8. The method of any one of claims 2 to 7, wherein at least one of the plurality of past event records and/or the first event record further comprises a free-text comment.

9. The method of claim 8, where the free-text comment outlines reasons for the status indicator to have been set at a specific likelihood.

10. The method of any preceding claim, further comprising, if the flag for the first event record has been set, receiving either a revised expected time of the first event or a revised first status indicator from the status indicator confidence model.

11. The method of any preceding claim, wherein the first event record is obtained from a user, further comprising notifying the user if the flag for the first event record has been set.

12. The method of any preceding claim, further comprising allocating further resources to the digitalised process in response to either:
the first status indicator indicating a low likelihood of the first event occurring at the first expected time and the flag for the first event record not being set; or
the first status indicator indicating a high likelihood of the first event occurring at the first expected time and the flag for the first event record being set.

13. The method of any preceding claim, further comprising:
receiving a justification of the first confidence score from the status indicator confidence model; and optionally
wherein the justification is based on a Shapely Additive Explanation (SHAP) algorithm.

14. A computer comprising a processor and a memory, the memory containing computer-readable instructions which, when executed on the processor, cause the processor to perform the method of any preceding claim.

15. A computer-readable storage medium containing computer-readable instructions which, when executed by a computer, cause the computer to perform the method of any one of claims 1 to 13.
